(19) Europäisches Patentamt

European Patent Office

Office européen des brevets

(11) **EP 0 989 745 A2**

(12) **EUROPEAN PATENT APPLICATION**

(43) Date of publication:
**29.03.2000 Bulletin 2000/13**

(51) Int. Cl.[7]: **H04N 5/21**

(21) Application number: **99307423.6**

(22) Date of filing: **20.09.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **25.09.1998 JP 27217498**

(71) Applicant:
**MATSUSHITA ELECTRIC INDUSTRIAL CO., LTD.**
**Kadoma-shi, Osaka 571-8501 (JP)**

(72) Inventors:
• **Kasahara, Misa**
  **Yokohama-shi, Kanagawa-ken 223-0053 (JP)**

• **Ishida, Yoshihiro**
  **Yokohama-shi, Kanagawa-ken 241-0005 (JP)**
• **Fujita, Yukio**
  **Kakegawa-shi, Shizuoka-ken 436-0041 (JP)**
• **Kato, Noriyoshi**
  **Hamamatsu-shi, Shizuoka-ken 430-0814 (JP)**

(74) Representative:
**Dempster, Benjamin John Naftel et al**
**Withers & Rogers,**
**Goldings House,**
**2 Hays Lane**
**London SE1 2HW (GB)**

(54) **Apparatus and method for processing a video signal, and a program storing medium for the same**

(57)    A counter counts the frame counts n of a video signal. A delay for generating a delayed video signal delayed by one frame. A motion detector detects a motion from the video and delayed video signals. A circular coefficient generator generates coefficients k and 1-k according to the detected motion. A first circuit generates a first circulation signal from the video signal according to n, k, and a pre-determined value N. A second circuit generates a second circulation signal from the delayed video signal according to k and n. A adder adds the first circulation signal to the second circulation signal. $0 \leq k \leq 1$. In the first circuit, a first multiplier multiplies (1 - k) by N which is a natural number more than one, a second multiplier multiplies an output of the first multiplier by the video signal, and a first switch outputs the video signal when $n \geq N$ and outputs an output of the second multiplier when $n < N$, to generate the first circulation signal. In the second circuit, a third multiplier multiplies the video signal by k, and a second switch outputs the video signal when $n \geq N$, and outputs an output of the third multiplier when $n < N$, to generate the second circulation signal. A method and a storing medium storing¥ a video processing program are also disclosed.

*FIG. 1*

EP 0 989 745 A2

**Description**

This invention relates to a video signal processing apparatus, a method of processing a video signal, and a storing medium storing a program of processing a video signal.

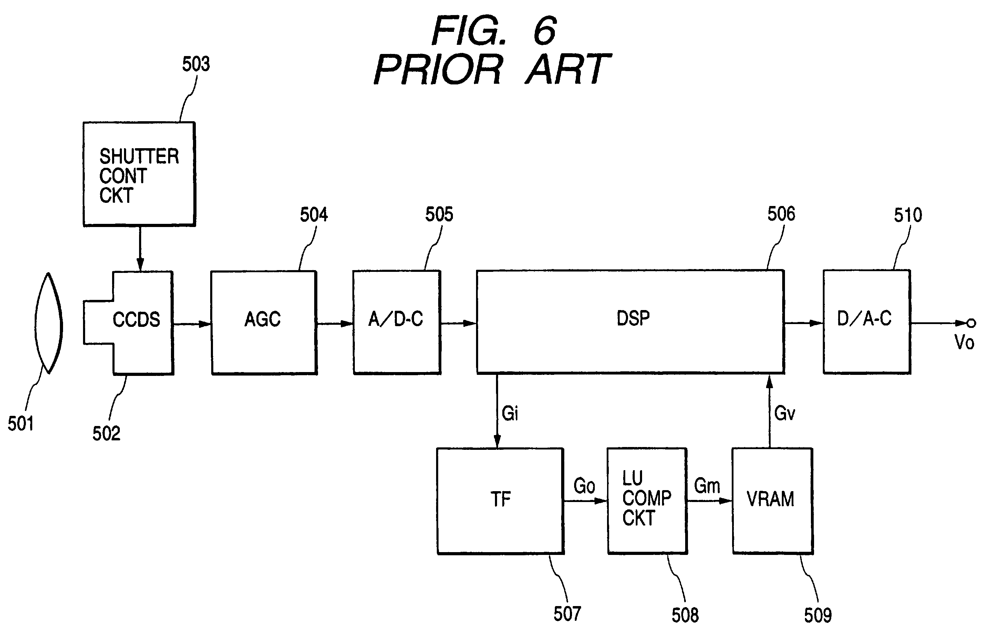

A video signal processing apparatus including luminance compensating circuit for multiplying a luminance signal of a video signal by a coefficient to increase a sensitivity is known. Japanese patent application provisional publication No. 8-181910 discloses such a prior art video signal processing apparatus. Fig. 6 is a block diagram of the prior art video signal processing apparatus.

A lens 501 receives and forms an image on a CCD image sensor 502 which generates an analog video signal with control by a shutter control circuit 503. An AGC circuit 504 amplifies the analog video signal with a gain controlled. An output of the AGC is supplied to a digital signal processor (DSP) 506 through an a/d converter 505. The digital signal processor 506 generates a digital video signal Gi which is supplied to a time filter 507 for generating a processed signal Go which is supplied to a luminance compensating circuit 508 for multiplying the processed signal Go by a coefficient β to suppress luminance change developed in the time filter 507.

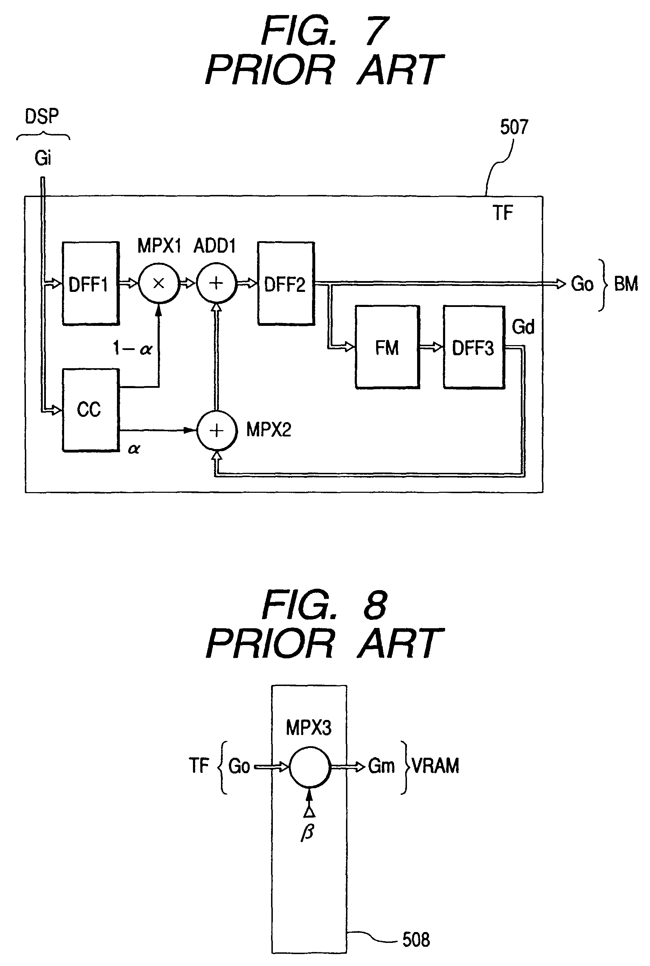

Fig. 7 is a block diagram of the time filter 507 of the prior art video signal processing apparatus shown in Fig. 6. Fig. 8 is a block diagram of the luminance compensating circuit 508 of the prior art video signal processing apparatus shown in Fig. 6.

In the time filter 507, a coefficient control circuit CC judges a motion in the digital video signal Gi and generates a coefficient $\alpha$ $0 \leqq \alpha \leqq 1$ in accordance with the detected motion amount and generates another coefficient 1 - $\alpha$. The video signal via D-FF DFF1 is multiplied by 1 - $\alpha$ with a multiplier MPX1 and a delayed video signal is multiplied by $\alpha$ with a multiplier MPX2. The outputs of the multipliers MPX1 and MPX2 are added by an adder ADD1. The luminance compensating circuit 508 multiplies the processed signal Go from the time filter 507 by a coefficient $\beta$ to suppress the luminance change developed in the time filter 507.

The aim of the present invention is to provide a superior video signal processing apparatus, a superior method of processing a video signal, and a superior storing medium storing a processing program of a video signal.

According to the present invention there is provided a first video signal processing apparatus including: a counter responsive to a video signal for counting the number of frames of the video signal; a delay for generating a delayed video signal which is delayed by one frame to the video signal; a motion detector for detecting a motion from images of the video signal and the delayed video signal; a circulation coefficient generation circuit for generating a coefficient k in accordance with an output of the motion detector, the coefficient k indicating a ratio between amounts of the video signal and the delayed video signal circulated in the video signal processing circuit; a first circulation signal generation circuit for generating a first circulation signal from the video signal in accordance with the number, the coefficient k, and a predetermined number; a second circulation signal generation circuit for generating a second circulation signal from the delayed video signal in accordance with the coefficient k and the number; and an adder for adding the first circulation signal to the second circulation signal to generate an output video signal which is supplied to the delay to circulate the first and second circulation signals in a loop including the adder, the delay, and the second circulation signal generation circuit.

In the first video signal processing apparatus, $0 \leqq k \leqq 1$. The first circulation signal generation circuit includes a subtractor for subtracting the coefficient k from one, a first multiplier for multiplying an output of the subtractor by N which is a natural number more than one, a second multiplier for multiplying an output of the first multiplier by the video signal, and a switch for outputting the video signal when the number is less than N and outputting an output of the second multiplier when the number is equal to or greater than N, to generate the first circulation signal.

In the first video signal processing apparatus $0 \leqq k \leqq 1$. The second circulation signal generation circuit includes a multiplier for multiplying the delayed video signal by the coefficient k, and a switch for outputting the video signal when the number is less than N, which is a natural number more than one, and outputting an output of the multiplier when the number is equal to or greater than N, to generate the second circulation signal.

According to this invention there is provided a second video signal processing apparatus including: a counter responsive to a video signal for counting the number of frames of the video signal; a delay for generating a delayed video signal which is delayed by one frame to the video signal; a motion detector for detecting a motion from images of the video signal and the delayed video signal; a coefficient generation circuit for generating a coefficient k in accordance with an output of the motion detector, the coefficient k indicating a ratio between the video signal and the delayed video signal circulated in the video signal processing circuit; a first circulation signal generation circuit for generating a first circulation signal from the video signal in accordance with the coefficient (1 - k); a second circulation signal generation circuit for generating a second circulation signal from the delayed video signal in accordance with a coefficient k; and an adder for adding the first circulation signal to the second circulation signal to generate an output video signal which is supplied to the delay to circulate the first circulation signal in a loop including the adder, the delay, and the second circulation signal generation circuit, wherein $0 \leqq k \leqq 1$. The first circulation signal generation circuit includes a first multiplier for multiplying the coefficient by N which is a natural number more than one, a second multiplier for multiplying an output of the first multiplier by the video signal, and a first switch for outputting the video signal when the number is less than N and outputting an output of the second multiplier when the number is equal to or greater than N, to generate the first circulation signal, and the second circulation signal generation circuit includes a third multiplier for multiplying the video signal by the coefficient k, and a second switch for outputting the delayed video signal when the number is less than N and outputting an output of the third multiplier when the number is equal to or greater than N, to generate the second circulation signal.

According to this invention, there is provided a method of processing a video signal comprising the steps of: (a) counting the number of frames of the video signal; (b) generating a delayed video signal which is delayed by one frame; (c) detecting a motion from images of the video signal and the delayed video signal; (d) generating a coefficient k in accordance with the detected motion, the coefficient k indicating a ratio between the video signal and the delayed video signal circulated in the video signal processing circuit; (e) generating a first circulation signal from the video signal in accordance with the number, the coefficient k, and a predetermined number; (f) generating a second circulation signal from the delayed video signal in accordance with the coefficient k and the number; and (g) adding the first circulation signal to the second circulation signal to generate an output video signal which is supplied to generate the delayed video signal.

In this method $0 \leqq k \leqq 1$. The step (e) includes the steps of: subtracting the k from one to provide a coefficient $(1- k)$; multiplying the coefficient $(1 - k)$ by N which is a natural number more than one to output $N \cdot (1-k)$; multiplying the video signal by $N \cdot (1- k)$ to output a multiplying result; and outputting the video signal when the number is less than N and outputting the multiplying result when the number is equal to or greater than N, to generate the first circulation signal.

Moreover in this method, $0 \leqq k \leqq 1$. The step (f) includes the steps of: multiplying the video signal by the coefficient k to output a multiplying result; and outputting the delayed video signal when the number is less than N, which is a natural number more than one, and outputting the multiplying result when the number is equal to or greater than N, to generate the second circulation signal.

According to this invention, there is provided a storing medium storing a video signal processing program including the steps of: (a) counting the number of frames of the video signal; (b) generating a delayed video signal which is delayed by one frame; (c) detecting a motion from images of the video signal and the delayed video signal; (d) generating a coefficient k in accordance with the detected motion, the coefficient k indicating a ratio between the video signal and the delayed video signal circulated in the video signal processing circuit; (e) generating a first circulation signal from the video signal in accordance with the number, the coefficient k, and a predetermined number; (f) generating a second circulation signal from the delayed video signal in accordance with the coefficient k and the number; and (g) adding the first circulation signal to the second circulation signal to generate an output video signal which is supplied to generate the delayed video signal.

The object and features of the present invention will become more readily apparent from the following detailed description taken in conjunction with the accompanying drawings in which:

Fig. 1 is a block diagram of a video processing signal of an embodiment of a present invention;
Figs. 2 and 3 are block diagrams of first and second circulation signal generation circuits shown in Fig. 1;
Fig. 4 depicts a flow chart of this embodiment showing a process of the video signal;
Fig. 5 is an illustration of this embodiment showing a storing medium storing the process of the video signal and a computer executing the process using the storing medium;
Fig. 6 is a block diagram of the prior art video signal processing apparatus;
Fig. 7 is a block diagram of the time filter of the prior art video signal processing apparatus shown in Fig. 6; and
Fig. 8 is a block diagram of the luminance compensating circuit of the prior art video signal processing apparatus shown in Fig. 6.

The same or corresponding elements or parts are designated with like references throughout the drawings.

Hereinbelow will be described an embodiment of this invention.

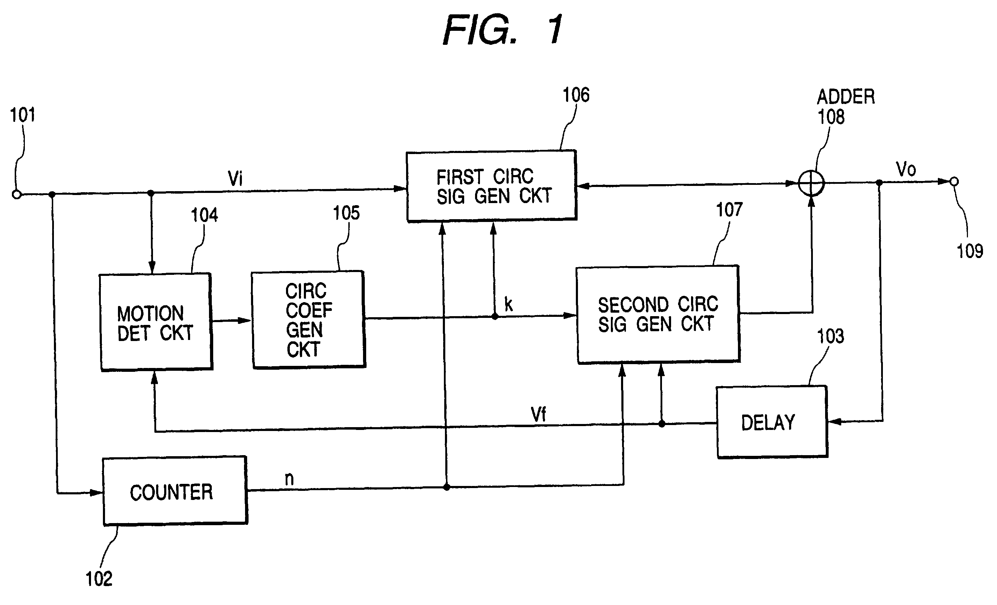

Fig. 1 is a block diagram of a video processing signal of an embodiment of a present invention.

The video signal processing apparatus of the embodiment includes: a counter 102 responsive to a video signal Vi for counting the number n of frames (frame count) of the video signal Vi by detecting a vertical synchronizing signal of the video signal Vi; a delay 103 including a frame memory for generating a delayed video signal Vf which is delayed by one frame from the video signal Vi; a motion detecting circuit 104 for detecting a motion from images of the video signal Vi and the delayed video signal Vf; a circular coefficient generation circuit 105 for generating a coefficient k in accordance with an output of the motion detecting circuit 104, the coefficient indicating a ratio between the video signal Vi and the delayed video signal Vf to be circulated; a first circulation signal generation circuit 106 for generating a first circulation signal from the video signal Vi in accordance with the frame number, the coefficient k, and a predetermined value N; a second circulation signal generation circuit 107 for generating a second circulation signal from the delayed video signal Vf in accordance with the coefficient k and the frame number; and an adder 108 for circulating the first and second circulation signals by adding the first circulation signal to the second circulation signal to generate an output video signal Vo which is outputted and supplied to the delay 103 to circulate the first circulation signal in a loop including the adder 108, the delay 103, and the second circulation signal generation circuit 107.

The video signal Vi inputted from an input terminal 101 is supplied to the motion detection circuit 104, a first circulation signal generation circuit 106, and the counter 102. On the other hand, the delay 103 is supplied with the output video signal Vo. The delay 103 delays the video signal Vi by one frame to output the delayed video signal Vf which is supplied to the motion detection circuit 104 and to the second circulation signal generation circuit 107.

The motion detection circuit 104 detects motion in the consecutive images of the video signal Vi and the delayed video signal Vf to supply a motion detection signal to the circular coefficient generation circuit 105.

The circular coefficient generation circuit 105 generates the coefficient k ranging from zero to one in accordance with the motion detection signal. That is, if the motion is judged to be a high degree, the coefficient having a low value is generated. If the motion is judged to be a low degree, the coefficient k having a high value is generated. The coefficient k represents a rate of circulating the video signal Vi in this video signal processing circuit, so that the coefficient generation circuit 105 determines the rate of circulating the video signal Vi. The coefficient k is supplied to the first circulation signal generation circuit 106 and to a second circulation signal generation circuit 107.

On the other hand, the counter 102 detects the vertical synchronizing signal in the video signal Vi and counts the frame count n and supplies the frame count n to the first circulation signal generation circuit 106 and to the second circulation signal generation circuit 107.

The first circulation signal generation circuit 106 receives the video signal Vi, the coefficient k, and the frame count n and generates the first circulation signal supplied to the adder 108 to determine the ratio of the video signal Vi to be circulated in this video signal generation apparatus.

The second circulation signal generation circuit 107 receives the delayed video signal Vf, the coefficient k, and the frame count n and generates the second circulation signal supplied to the adder 108 to determine the ratio of the delays video signal Vf to be circulated in this video signal generation apparatus.

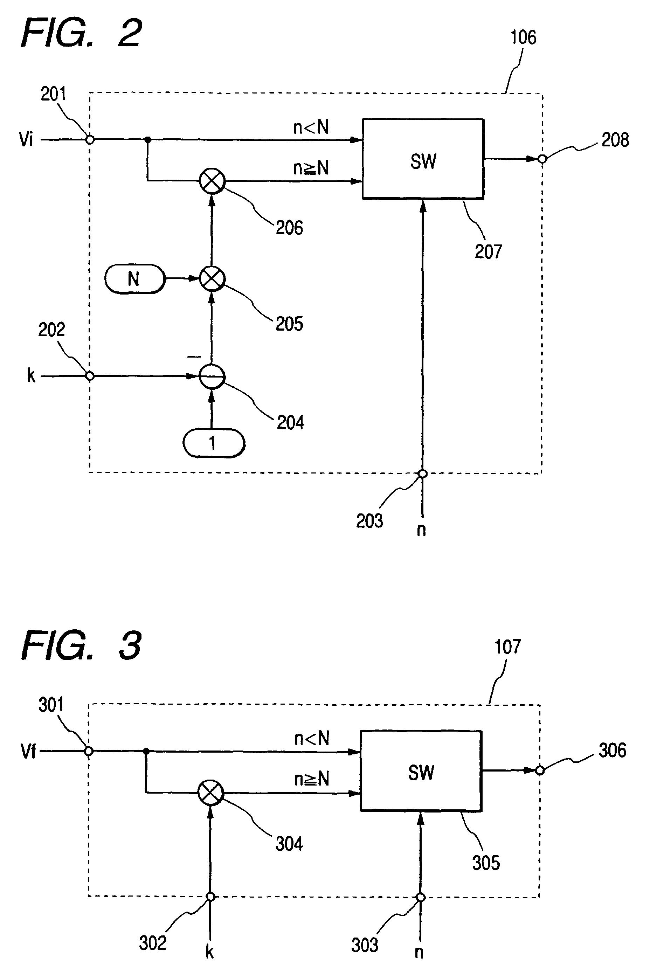

Figs. 2 and 3 are block diagrams of first and second circulation signal generation circuits 106 and 107, respectively, shown in Fig. 1.

The first circulation signal generation circuit 106 includes a subtractor 204 for subtracting the coefficient k from one, a first multiplier 205 for multiplying an output of the subtractor 204 by the predetermined value N which is a natural number more than one, a second multiplier 206 for multiplying an output of the first multiplier 205 by the video signal Vi, and a switch 207 for outputting the video signal Vi when the frame number is less than N and outputting an output of the second multiplier 206 when the frame number is equal to or greater than the predetermined value N, to generate the first circulation signal 208, wherein $0 \leqq k \leqq 1$.

In the first circulation signal generation circuit 106, the circulation coefficient k is subtracted from one by the subtractor 204 to generates the coefficient (1 - k) which is supplied to the multiplier 205 which multiplies the predetermined value N by the coefficient (1 - k) to generate N · (1- k) supplied to the multiplier 206.

On the other hand, the video signal Vi inputted at an input terminal 201 is supplied to the multiplier 206 and to the switch 207.

The multiplier 206 multiplies the video signal Vi by N · (1 - k) from the multiplier 205 and supplies the result to the switch 207.

The switch 207 receives the frame count n from an input terminal 203 of the first circulation signal generation circuit 106 and outputs either the video signal Vi or the output of the multiplier 206. That is, if the frame count n is less than the predetermined value N, the switch 207 outputs the video signal Vi and if the frame count n is equal to or greater than N, the switch 207 outputs the output of the multiplier 206. The output of the switch 208 is supplied to the adder 108 as the first circulation signal through an output terminal 208 of the first circulation signal generation circuit 106.

As shown in Fig. 3, the second circulation signal generation circuit 107 includes a third multiplier 304 for multiplying the video signal Vi by the coefficient k, and a switch 305 for outputting the video signal Vi when the frame number is less than N and outputting an output of the third multiplier 304 when the frame number is equal to or greater than N, to generate the second circulation signal.

In the second circulation signal generation circuit 107, the circulation coefficient k is supplied to the multiplier 304.

On the other hand, the delayed video signal Vf is supplied to the multiplier 304 and to the switch 305 through an input terminal 301.

The multiplier 304 multiplies the delayed video signal Vf by k from an input terminal 302 and supplies the result to the switch 305.

The switch 305 receives the frame count n from an input terminal 303 of the second circulation signal generation circuit 106 and outputs either the delayed video signal Vf or the output of the multiplier 304. That is, if the frame count n is less than the predetermined value N, the switch 305 outputs the delayed video signal Vf and if the frame count n is equal to or greater than N, the switch 305 outputs the output of the multiplier 304. The output of the switch 305 is supplied to the adder 108 as the second circulation signal through an output terminal 306 of the second circulation signal generation circuit 107.

As mentioned, the output video signal Vo is represent as follows:

If the frame count n is less than N,

$$Vo = Vi + Vf \tag{1}$$

If the frame count n is equal to or greater than N,

$$Vo = N \cdot (1 - k) \cdot Vi + k \cdot Vf \tag{2}$$

wherein the coefficient k is generated in accordance with the degree of the motion detected by the motion detection circuit 104. Therefore, if the frame count n is less than N, addition of the video signal and the delayed video signal (frame addition) provides increase in the sensitivity because the video signal Vi is partially accumulated. If the frame count n is equal to or greater than N, the video signal is circulated in accordance with the ratio (coefficient k) of amounts of the video signal Vi and the delayed video signal Vf. This provides increase in the sensitivity without decrease in the gradation because the video signal Vi is not directly multiplied by a predetermined value.

This operation will be described more specifically.

It is assumed that N is four, the video signal Vi of $n^{th}$ frame is represented by Vin, and the output video signal Vo is represented by Von, wherein N is a magnification of the sensitivity.

If the frame count n is less than N,

at the first frame: Vo1 = Vi1 + Vf0  (twice the sensitivity)
at the second frame: Vo2 = Vi2 + Vo1
 = Vi2 + Vi1 + Vf0  (three times), and
at the third frame: Vo3 = Vi3 + Vi2 + Vi1 + Vf0  (four times)
  If the frame count n is equal to or greater than N,

$$Vo4 = 4 \cdot (1 - k) \cdot Vi4 + k \cdot Vo3$$
$$= 4 \cdot (1 - k) \cdot Vi4 + k \cdot (Vi3 + Vi2 + Vi1 + Vf0)$$

(four times)

Then, if the frame count n equal to or greater than 4, the delayed video signal including four prior frames of the video signal is added to a value of four times the video signal of the present frame with the coefficient k indicating the ratio between amounts of the video signal and the delayed video signal circulated, so that the sensitivity can be increased without directly multiplying the video signal by a predetermined value.

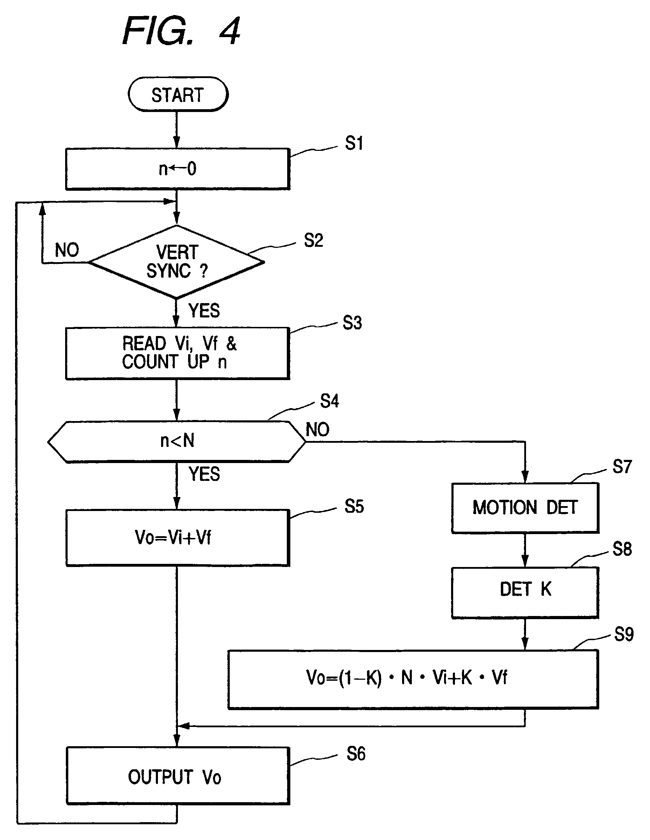

Fig. 4 depicts a flow chart of this embodiment showing a process of the video signal Vi.

In Fig. 4, the frame count n is initialized in step s1. In the following step, it is judged whether a vertical synchronizing signal of the video signal Vi is present. If the vertical synchronizing signal of the video signal Vi is present, the video signal Vi and the delayed video signal Vf is read and the frame count n is counted up in step s3. If the frame count n is smaller than the predetermined number N in step s4, the output video signal Vo obtained by summing the video signal Vi and the delayed video signal Vf in step s5. In the following step s6, the output video signal Vo is supplied to a video RAM (not shown) through the output terminal 109.

If the frame count n is equal to or greater than the predetermined number N in step s4, a motion is detected from the consecutive frames of the video signal Vi and the delayed video signal Vf in step s7. Then, the coefficient k is determined in accordance with the extent of the detected motion in step s8. In the following step s9, the output video signal Vo is obtained by $Vo = (1 - k) \cdot N \cdot Vi + k \cdot Vf$ and outputted in step s6. Then, processing returns to step s2.

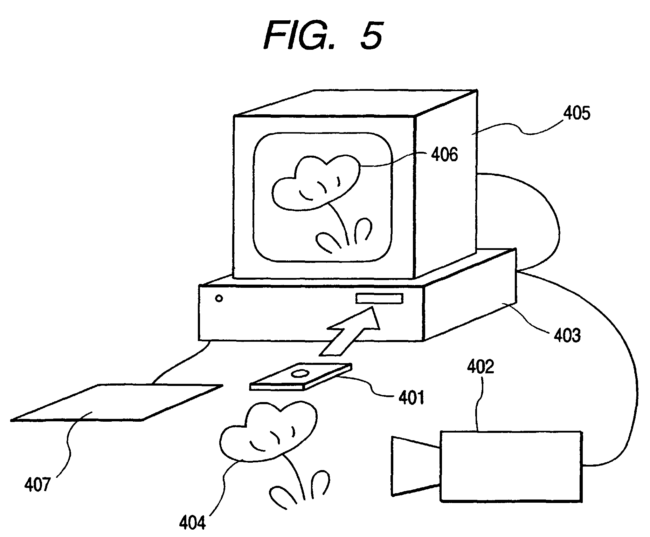

Fig. 5 is an illustration of this embodiment showing a storing medium stores a program of this embodiment.

A storing medium 401 such as a floppy disc or a CD ROM stores the processing shown in Fig. 4. That is, the program shown in Fig. 4 is inputted by a keyboard 407 and stored in the floppy disc 401. Then, if data of the program is erased by turning off the computer 403, the program can be stored again. That is, on turning on the computer 403, the floppy disc 401 is put in the computer 403 which reads and stores the data of the program in the memory to execute the program. The computer 403 receives a video signal from a video camera 402 taking an image of a flower 404. The computer 403 executes the program of processing the video signal stored in the storing medium 401 as shown in Fig. 4 and the output video signal Vo is converted to a display drive signal which is supplied to a video monitor 405 which reproduces the image 406 corresponding to the image of the flower 404.

## Claims

1. A video signal processing apparatus comprising:

counting means responsive to a video signal for counting the number of frames of said video signal;
delaying means for generating a delayed video signal which is delayed by one frame to said video signal;
motion detecting means for detecting a motion from images of said video signal and said delayed video signal;
circulation coefficient generation means for generating a coefficient k in accordance with an output of said motion detecting means, said coefficient k indicating a ratio between amounts of said video signal and said delayed video signal circulated in said video signal processing circuit;
first circulation signal generation means for generating a first circulation signal from said video signal in accordance with said the number, said coefficient k, and a predetermined number;
second circulation signal generation means for generating a second circulation signal from said delayed video signal in accordance with said coefficient k and said the number; and
adding means for adding said first circulation signal to said second circulation signal to generate an output video signal which is supplied to said delay means to circulate said first and second circulation signals in a loop including said adding means, said delay means, and said second circulation signal generation means.

2. A video signal processing apparatus as claimed in claim 1, wherein $0 \leqq k \leqq 1$, said first circulation signal generation means includes a subtractor for subtracting said k from one, first multiplying means for multiplying an output of said subtractor by N which is a natural number more than one, second multiplying means for multiplying an output of said first multiplying means by said video signal, and switch means for outputting said video signal when said the number is less than N and outputting an output of said second multiplexing means when said the number is equal to or greater than N, to generate said first circulation signal.

3. A video signal processing apparatus as claimed in claim 1, wherein $0 \leqq k \leqq 1$, said second circulation signal generation means includes multiplying means for multiplying said delayed video signal by said coefficient k, and switch means for outputting said video signal when said the number is less than N, which is a natural number more than one, and outputting an output of said multiplying means when said the number is equal to or greater than N, to generate said second circulation signal.

4. A video signal processing apparatus comprising:

counting means responsive to a video signal for counting the number of frames of said video signal;
delaying means for generating a delayed video signal which is delayed by one frame to said video signal;
motion detecting means for detecting a motion from images of said video signal and said delayed video signal;
coefficient generation means for generating a coefficient k in accordance with an output of said motion detecting means, said coefficient k indicating a ratio between amounts of said video signal and said delayed video signal circulated in said video signal processing circuit;
first circulation signal generation means for generating a first circulation signal from said video signal in accordance with a coefficient (1 -k);
second circulation signal generation means for generating a second circulation signal from said delayed video signal in accordance with a coefficient k; and
adding means for adding said first circulation signal to said second circulation signal to generate an output video signal which is supplied to said delay means to circulate said first and second circulation signals in a loop including said adding means, said delay means, and said second circulation signal generation means,
wherein $0 \leqq k \leqq 1$, said first circulation signal generation circuit includes first multiplying means for multiplying said coefficient by N which is a natural number more than one, second multiplying means for multiplying an output of said first multiplying means by said video signal, and first switch means for outputting said video signal when said the number is less than N and outputting an output of said second multiplexing means when said the number is equal to or greater than N, to generate said first circulation signal, and said second circulation signal generation means includes third multiplying means for multiplying said video signal by said coefficient k, and second switch means for outputting said delayed video signal when said the number is less than N and outputting an output of said third multiplying means when said the number is equal to or greater than N, to generate said second circulation signal.

5. A method of processing a video signal comprising the steps of:

(a) counting the number of frames of said video signal;

(b) generating a delayed video signal which is delayed by one frame to said video signal;

(c) detecting a motion from images of said video signal and said delayed video signal;

(d) generating a coefficient k in accordance with said detected motion, said coefficient k indicating a ratio between amounts of said video signal and said delayed video signal circulated in said video signal processing circuit;

(e) generating a first circulation signal from said video signal in accordance with said the number, said coefficient k, and a predetermined number;

(f) generating a second circulation signal from said delayed video signal in accordance with said coefficient k and said the number; and

(g) adding said first circulation signal to said second circulation signal to generate an output video signal which is supplied to generate said delayed video signal.

6. A method of processing a video signal as claimed in claim 5, wherein $0 \leqq k \leqq 1$ and said step (e) includes the steps of:

subtracting said k from one to provide a coefficient (1- k);

multiplying said coefficient (1 - k) by N which is a natural number more than one to output N · (1- k);

multiplying said video signal by N · (1- k) to output a multiplying result; and

outputting said video signal when said the number is less than N and outputting said multiplying result when said the number is equal to or greater than N, to generate said first circulation signal.

7. A method of processing a video signal as claimed in claim 5, wherein $0 \leqq k \leqq 1$ and said step (f) includes the steps of:

multiplying said video signal by said coefficient k to output a multiplying result; and

outputting said delayed video signal when said the number is less than N, which is a natural number more than one, and outputting said multiplying result when said the number is equal to or greater than N, to generate said second circulation signal.

8. A storing medium storing a program of processing a video signal comprising the steps of:

(a) counting the number of frames of said video signal;

(b) generating a delayed video signal which is delayed by one frame to said video signal;

(c) detecting a motion from images of said video signal and said delayed video signal;

(d) generating a coefficient k in accordance with said detected motion, said coefficient k indicating a ratio between amounts of said video signal and said delayed video signal circulated in said video signal processing circuit;

(e) generating a first circulation signal from said video signal in accordance with said the number, said coefficient k, and a predetermined number;

(f) generating a second circulation signal from said delayed video signal in accordance with said coefficient k and said the number; and

(g) adding said first circulation signal to said second circulation signal to generate an output video signal which is supplied to generate said delayed video signal.

9. A storing medium as claimed in claim 8, wherein $0 \leqq k \leqq 1$ and said step (e) includes the steps of:

subtracting said k from one;

multiplying an output of said subtractor by N which is a natural number more than one to output a first multiplying result;

multiplying said first multiplying result by said video signal to output a second multiplying result; and

outputting said video signal when said the number is equal to or less than N and outputting said second multiplying result when said the number is greater than N, to generate said first circulation signal.

10. A storing medium as claimed in claim 8, wherein $0 \leqq k \leqq 1$ and said step (f) includes the steps of:

multiplying said video signal by said coefficient k to output a multiplying result; and

outputting said video signal when said the number is equal to or less than N, which is a natural number more than one, and outputting an output of said multiplying result when said the number is greater than N, to generate said second circulation signal.

FIG. 1

# FIG. 2

# FIG. 3

# FIG. 4

START

$n \leftarrow 0$ — S1

VERT SYNC ? — S2

NO

YES

READ Vi, Vf & COUNT UP n — S3

$n < N$ — S4

NO

YES

$V_o = V_i + V_f$ — S5

MOTION DET — S7

DET K — S8

$V_o = (1-K) \cdot N \cdot V_i + K \cdot V_f$ — S9

OUTPUT Vo — S6

# FIG. 5

# FIG. 6
# PRIOR ART

EP 0 989 745 A2

# FIG. 7
# PRIOR ART

# FIG. 8
# PRIOR ART